# EUROPEAN PATENT APPLICATION

(11) **EP 0 534 065 A1**
(43) Date of publication of application: **31.03.1993**
(21) Application number: 92110819.7
(22) Date of filing: 26.06.1992
(51) Int. Cl.: G21C 17/06, G21C 21/02, G01N 29/04, G01P 15/00

(54) **Application of frequency analysis to determine fuel pellet characteristics and acceptance**

(30) Priority: 23.09.1991 US 764266
(71) Applicant: COMBUSTION ENGINEERING, INC., Windsor, Connecticut 06095 (US)
(72) Inventor: Bryan, William Jaye, Granby, Connecticut 06035 (US)
(74) Representative: Rupprecht, Klaus, Dipl.-Ing.

(57) **Abstract**

A method and means for detecting defects in nuclear fuel pellets as they are being manufactured in a rotary press 10. Vibrations of the press are sensed by accelerometers 16 disposed near each of the die cavities 14a. The frequency distribution of the vibrations is analyzed to detect the existence of pellet defects. The process variables of the press 10 may be adjusted in response to the defect analysis.

## Description

### BACKGROUND AND SUMMARY OF THE INVENTION

The present invention pertains to the fabrication of nuclear fuel pellets and, more particularly, to a method and means for detecting defects in such pellets during the fabrication process and for adjusting the fabrication process variables to prevent recurrence of such defects.

Nuclear fuel pellets are commonly fabricated by compaction of uranium oxide powder in a multi-cavity rotary press. The compacted pellets may be cracked or chipped during the fabrication process. Pellets containing such defects are unacceptable and must be separated from the remainder of the press output prior to loading of the pellets into fuel rods.

It is, therefore, an object of the present invention to provide a method and means for detecting pellet defects as they occur during the manufacturing process, whereby defective pellets may be promptly identified and removed from the stream of compacted pellets.

It is a further object of the invention to provide a method and means for ascertaining the cause or causes of identified pellet defects and for promptly adjusting the pressing machine process variables to prevent recurrence of such defects.

The foregoing and other objects as may hereinafter appear, are achieved by sensing the vibrations produced in the press during the pellet fabrication process and analyzing the frequency distribution of the vibrations to detect the existence of defects. In an embodiment of the invention, the process variables of the press are adjusted in response to the defect analysis.

Means to practice the foregoing method comprise at least one transducer operatively associated with the press and, preferably, at least one transducer operatively associated with each die cavity. Transducer signals are processed in a signal analyzer. In an embodiment of the invention, the processed signals are utilized to identify and remove defective pellets and adjust the pressing process variables.

### BRIEF DESCRIPTION OF THE DRAWINGS

Figure 1 is a front plane view of a rotary press;

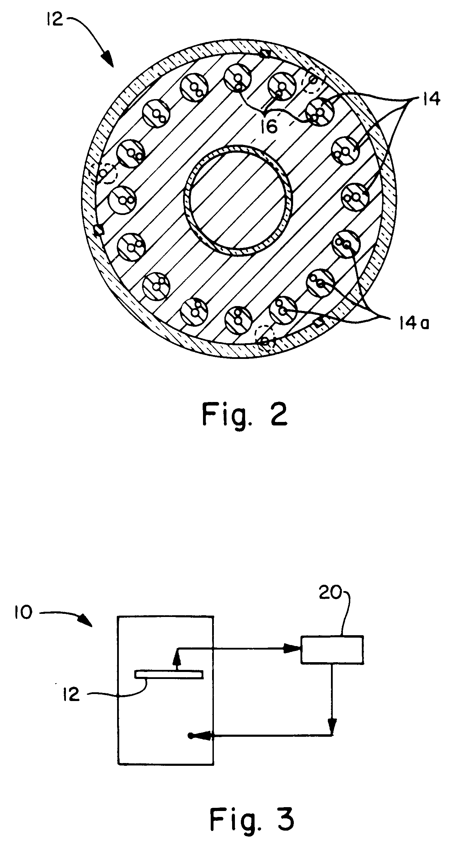

Figure 2 is a top plane view of the rotating turret of the press of Fig. 1; and
Figure 3 is a schematic view of the nuclear fuel pellet fabrication system of the present invention.

### DESCRIPTION OF THE PREFERRED EMBODIMENT

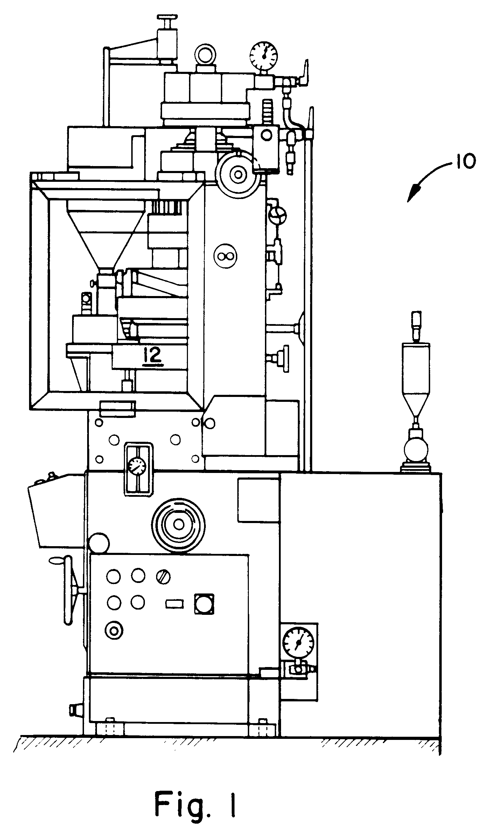

Turning now to the drawings, there is illustrated in Fig. 1 a conventional, multi-cavity rotary press 10 of the type commonly used in the fabrication of nuclear fuel pellets by the compaction of uranium oxide powder. This press type is exemplified by the Model R.53 produced by Courtoy S.p.r.l. of Halle, Belgium.

Press 10 includes a rotating turret 12 having several in this case 16, individual die blocks 14 each having a die cavity 14a adapted to produce a single fuel pellet. It is to be understood that turret 12 is continuously rotated. During this rotation, measured quantities of powder are loaded into die cavities 14a and are therein compacted to form pellets which are thereupon removed for loading into fuel rods. This fabrication process is subject to several process variables, including, enter alia, the amount of powder loaded into the die cavities, compaction pressure, compaction velocity and die temperature.

During the fabrication process, cracking or chipping of the pellets may occur. In order to detect such defective pellets, transducers 16, preferably accelerometers, are operatively disposed in turret 12, preferably with a transducer 16 adjacent or most preferably within each die block 14. Transducers 16 are adapted to sense vibrations in die blocks 14, associated with the production of a defective pellet. These vibrations include resonance induced by the ceramic pellets as cracks or chips are formed.

The output of transducers 16 is transmitted to a data analysis device 20 comprising, for example an analog/digital converter and a micro-computer, where the vibrations frequency distribution is analyzed to detect the presence of defective pellets. The defective pellets may be segregated from the remainder of the production stream immediately upon ejection from the die cavity.

By comparison of vibration frequency distribution patterns, or spectrum, with patterns representative of known defect causes, the causes of pellet defects may be diagnosed. Other fast fourier transform analyses methods could also be employed such as auto-correlation, power spectrum, cross-correlation, cross spectrum, transfer and coherence to diagnose defects. Even the use of real time vibration signatures can be compared. However, because of the complex nature of the real time curves the preferred method of analysis is comparison of frequency distributions. Once the cause or causes of the pellet defects have been determined, the press process variables may be adjusted to prevent a recurrence of such defects. To this end, analysis device 20 is operatively connected to the operating controls of press 10.

Data generated by transducers 16 may be processed in accord with known mathematical methods, as exemplified by Stochastic Treatment of Loose Part Impact Signals, presented at the American Nuclear Society Annual Winter Meeting, October 30-November 4, 1983; Statistical Analysis of Loose Part Monitoring System Signals to Diagnose the Presence of a Loose Part on the Secondary Side of a PWR Steam Generator, report 86-JPGC-NE-3 of The American Society of Mechanical Engineers (ASME); Digital Analysis Techniques Used in Nuclear Fuel Vibration Analysis, ASME, Symposium on Flow Induced Vibration, 1979; In-Core Detection of Nuclear Fuel Assembly Vibration, report and 79-DET-43 of The ASME; and Modal Analysis Using Digital Test Systems, The Shock and Vibration Information Center, Naval Research Laboratory, Washington, D.C.

## Claims

1. An improved method of fabricating nuclear fuel pellets, comprising the steps of:
providing a pressing machine having a plurality of die cavities, each of which is adapted to produce a single nuclear fuel pellet;
loading a predetermined quantity of powdered nuclear fuel into each of said die cavities;
compressing said powdered nuclear fuel within said die cavities to produce compacted solid pellets;
providing at least one transducer operatively associated with said pressing machine to sense vibrations therein producing during the pellet fabrication process; and
analyzing vibrations sensed by said at least one transducer to detect the existence of defects in the compacted pellets.

2. The method of claim 1, further comprising the steps of:
analyzing the vibrations to diagnose the cause of detected defects in the compacted pellets; and
adjusting pressing machine process variables in response to said analysis to prevent recurrence of such detects.

3. The method of claim 1, further comprising the steps of:
compiling the sensory outputs of said at least one transducer into a frequency distribution curve.

4. In a system for fabricating nuclear fuel pellets, of the type including:
a pressing machine having a plurality of die cavities, each of which is adapted to produce a single nuclear fuel pellet;
means for loading a predetermined quantity of powdered nuclear fuel into each of said die cavities; and
means for compressing powdered nuclear fuel within said die cavities to produce compacted solid pellets;
the improvement comprising:
transducer means operatively associated with said pressing machine to sense vibrations therein produced during the pellet fabrication process; and
means for analyzing the frequency distribution of vibrations sensed by said transducer means to detect the existence of defects in the compacted pellets.

5. The nuclear fuel pellet fabricating system of claim 4 wherein said transducer means comprises at least one transducer operatively associated with each of said die cavities.

6. The nuclear fuel pellet fabricating system of claim 5, wherein said transducers are accelerometers.

7. The nuclear fuel pellet fabricating system of claim 4, further comprising analyzing said frequency distribution to diagnose the cause of said defects, and feedback means for adjusting the process variables of said pressing machine to prevent recurrence thereof.
